**Europäisches Patentamt**

**European Patent Office**

**Office européen des brevets**

(19)

(11) Veröffentlichungsnummer: **0 124 857**
**B1**

(12)

# EUROPÄISCHE PATENTSCHRIFT

(45) Veröffentlichungstag der Patentschrift:
**29.03.89**

(21) Anmeldenummer: **84104895.2**

(22) Anmeldetag: **02.05.84**

(51) Int. Cl.⁴: **B 28 B 5/02**

(54) Einrichtung zum kontinuierlichen Herstellen von Werkstoffen unter Verwendung exotherm erhärtender Bindemittel.

(30) Priorität: **09.05.83 DE 3316946**

(43) Veröffentlichungstag der Anmeldung:
**14.11.84 Patentblatt 84/46**

(45) Bekanntmachung des Hinweises auf die Patenterteilung:
**29.03.89 Patentblatt 89/13**

(84) Benannte Vertragsstaaten:
**AT BE CH DE FR GB LI SE**

(56) Entgegenhaltungen:
**GB-A-742 751**
**LU-A-54 767**
**US-A-3 809 566**
**US-A-4 093 690**

(73) Patentinhaber: **FRAUNHOFER- GESELLSCHAFT ZUR FÖRDERUNG DER ANGEWANDTEN FORSCHUNG E.V., Leonrodstrasse 54, D-8000 München 19 (DE)**

(72) Erfinder: **Lempfer, Karten, Dr.rer.nat., Grünbergstrasse 18, D-3300 Braunschweig (DE)**
Erfinder: **Kossatz, Gert, Prof.Dr.- Ing.habil., im Gettelhagen 156, D-3300 Braunschweig (DE)**
Erfinder: **Sattler, Heinz, Dr.- Ing., Warnowstrasse 6, D-3300 Braunschweig (DE)**

(74) Vertreter: **Weber, Otto Ernst, Dipl.- Phys., Weber & Heim Hofbrunnstrasse 36, D-8000 München 71 (DE)**

**Beschreibung**

Die Erfindung betrifft eine Einrichtung zum kontinuierlichen Herstellen von Werkstoffen unter Verwendung exotherm erhärtender Bindemittel, wie Gips oder Zement, mit einer Misch- und Aufgabestation und einer Kalibrier- oder Preßvorrichtung sowie eine Regelanordnung zum Betreiben der Einrichtung.

Es ist bekannt, plattenförmige Werkstoffe unter Verwendung von Gips, zum Beispiel Gipskartonplatten, auf einer kontinuierlich arbeitenden Einrichtung herzustellen. Hierfür wird Stuckgips (ein sulfatisches Bindemittel, im wesentlichen bestehend aus $CaSO_4 \cdot 1/2H_2O$) mit Wasser und Zusätzen zu einem fließfähigen Brei angemacht, auf eine fortlaufende Kartonbahn aufgebracht, mit einer zweiten Kartonbahn abgedeckt und über eine Formstation zu einem allseitig mit Karton ummantelten, kontinuierlichen Plattenstrang geformt. Von diesem Strang werden nach Erhärten des Bindemittels einzelne Platten in der gewünschten Länge abgetrennt. Die Strecke zwischen Formstation und Trennvorrichtung einer solchen Einrichtung muß bei einer vorgegebenen Vorschubgeschwindigkeit so bemessen sein, daß eine vollständige Erhärtung des Bindemittels möglich ist. Eine ordnungsgemäße Weiterverarbeitung und die Herstellung von Platten gleichbleibender Qualität sind sonst nicht gewährleistet. Die Einrichtungslänge ist bei vorgegebener Vorschubgeschwindigkeit von der Erhärtungszeit des Bindemittels abhängig. Da diese noch näher zu definierende Erhärtungszeit erhebliche Schwankungen aufweist, muß die sich aus der Vorschubgeschwindigkeit ergebende Strecke zwischen Formstation und Trennvorrichtung sicherheitshalber der längsten zu erwartenden Erhärtungszeit entsprechen. Dies führt dazu, daß bei kürzeren Erhärtungszeiten des Bindemittels die dann theoretisch mögliche höhere Kapazität der Einrichtung nicht erreicht wird. Hierdurch ergeben sich betriebswirtschaftliche Nachteile.

Aus der deutschen Auslegeschrift 22 07 799 sind ein Verfahren und eine Vorrichtung zur kontinuierlichen Herstellung von Bauteilen auf Gipsbasis durch Gießen des Gipses in einen geradlinigen, in Längsrichtung fortschreitenden Formkanal, Zerschneiden bzw. Zersägen des so gebildeten Gipsstrangs in einzelne Teile und Nachbehandeln der geschnittenen Teile bekannt. In dieser Druckschrift ist zwar ein automatisierter Prozeß angesprochen, aber es ist keine spezielle Regeleinrichtung angegeben. Infolgedessen ist es mit diesem Verfahren und dieser Vorrichtung nicht möglich, die vorstehend genannten Nachteile zu überwinden.

Der Vollständigkeit halber sei noch erwähnt, daß in dem "Handbuch der Betonsteinindustrie" von Erich Probst, 1951, Seiten 33 bis 39 Angaben über Abbindung und Erhärtung von Gips sowie in dem "Zementtaschenbuch" 1970/71, Seiten 64 ff. Angaben über die Abbindung von Zement enthalten sind, jedoch enthalten diese Angaben keine Hinweise, wie die vorgenannten betriebswirtschaftlichen Nachteile bei der kontinuierlichen Herstellung von Werkstoffen unter Verwendung exotherm erhärtender Bindemittel, wie Gips oder Zement, beseitigt werden können.

Aufgabe der Erfindung ist es, eine Einrichtung der eingangs genannten Art so auszubilden, daß sie betriebswirtschaftlich optimal arbeitet.

Diese Aufgabe wird erfindungsgemäß dadurch gelöst, daß der Abstand zwischen Aufgabestation und Einlauf der Kalibrier- oder Preßvorrichtung einerseits und der Abstand zwischen Aufgabestation und Ende der Kalibrier- oder Preßvorrichtung andererseits unter Berücksichtigung der Dauer der Misch- und Streuzeit dem Verhältnis der Zeitdauer von Mischbeginn bis Versteifungsbeginn zu der Zeitdauer von Mischbeginn bis Hydrationsende entspricht, und daß die Vorschubgeschwindigkeit der kontinuierlichen Einrichtungs so geregelt wird, daß das Temperaturmaximum des exotherm erhärtenden Bindemittels kurz vor dem Verlassen der Kalibrier- oder Preßvorrichtung erreicht wird.

Auf diese Weise ergibt sich bei geringstmöglicher Länge der gesamten Einrichtung, die hier auch als Anlage bezeichnet wird, eine höchstmögliche Produktion.

Diese Einrichtung kann insbesondere so ausgebildet sein, daß als Istwertgeber mindestens zwei in Laufrichtung der Einrichtung im Abstand voneinander angeordnete Temperaturfühler im Bereich der Kalibrier- oder Preßvorrichtung angeordnet sind. Hierbei kann die Anordnung so sein, daß die Temperaturfühler vorzugsweise im Auslaufteil der Kalibrier- oder Preßvorrichtung angeordnet sind, und daß der zweite oder letzte Temperaturfühler in Laufrichtung der Einrichtung gesehen unmittelbar vor dem Auslauf der Kalibrier- oder Preßvorrichtung angeordnet ist.

Zur Weiterverarbeitung der von den Temperaturfühlern gelieferten Temperaturmeßwerte kann die Einrichtung so ausgebildet sein, daß ein Meßwertwandler, insbesondere ein Differenzverstärker, zur Bildung des Istwerts aus der Differenz zwischen dem Temperaturmeßwert, der von dem in Laufrichtung der Einrichtung letzten Temperaturfühler geliefert wird, und dem Temperaturmeßwert oder den Temperaturmeßwerten, der bzw. die von einem oder mehreren dem letzten Temperaturfühler vorgeordneten Temperaturfühlern geliefert wird bzw. werden, vorgesehen ist. Hierbei wird der Istwert bevorzugt so weiterverarbeitet, daß bei einer positiven Differenz, die einen einrichtungsspezifisch vorbestimmten Wert überschreitet, die Vorschubgeschwindigkeit der kontinuierlichen Einrichtung verringert wird, und daß bei einer negativen Differenz, die einen einrichtungsspezifisch vorbestimmten Wert überschreitet, die Vorschubgeschwindigkeit der kontinuierlichen Einrichtung beschleunigt wird, sowie daß bei einer absoluten Differenz, die unterhalb eines vorbestimmten Sollwerts liegt, die Vorschubgeschwindigkeit der kontinuierlichen Einrichtung unverändert gelassen wird. Schließlich ist es möglich, die Einrichtung so auszuführen, daß jeweils mehrere Temperaturfühler rechtwinklig zur Laufrichtung angeordnet sind, deren Meßwerte gemittelt werden, bevor daraus der Istwert gebildet wird.

Die Erfindung sei nachstehend anhand einiger Ausführungsformen unter Bezugnahme auf die Figuren 1 bis 3 der Zeichnung näher erläutert; es zeigen:

Figur 1 eine schematisch dargestellte Einrichtung zum kontinuierlichen Herstellen von Werkstoffen unter Verwendung exotherm erhärtender Bindemittel zur Erläuterung des Grundprinzips der Erfindung und den Temperaturverlauf in dem die Einrichtung durchlaufenden Material, aus dem der als Produkt entstehende Werkstoff hergestellt wird;

Figur 2 einen Teil der Einrichtung nach Figur 1, die mit Temperaturfühlern versehen ist;

Figuren 2a bis 2c Temperaturverläufe, die in der Einrichtung nach Figur 2 auftreten können; und

Figur 3 ein Ausführungsbeispiel einer vollständig ausgeführten erfindungsgemäßen Einrichtung.

Die nachfolgende Beschreibung bezieht sich beispielhaft auf die Verwendung von Gips als Bindemittel zur Erläuterung der Erfindung, jedoch ist die Erfindung in keiner Weise hierauf beschränkt.

Zum besseren Verständnis der Erfindung sei zunächst kurz auf die Grundlagen des Abbindemechanismus exotherm erhärtender Bindemittel am Beispiel von Gips eingegangen: Die Herstellung von Werkstoffen auf der Basis von Gips beruht auf den Vorgängen der De- und Rehydratation. Beim Brennen von Gips-Dihydrat $(CaSO_4 \cdot H_2O)$ entstehen durch Dehydratation bei entsprechenden Brennbedingungen sulfatische Bindemittel, die im wesentlichen aus Halbhydrat $(CaSO_4 \cdot 1/2H_2O)$ bestehen.

Beim Anmachen des Bindemittels mit Wasser geht das Halbhydrat bis zur Sättigungskonzentration in Lösung, es bildet sich durch Hydratation wieder Dihydrat, dessen Löslichkeit nur etwa den vierten Teil von der des Halbhydrats beträgt, so daß sich aus der an Dihydrat übersättigten Lösung Dihydrat in kristalliner Form abscheidet. Dieser Vorgang setzt sich bis zur vollständigen Umwandlung des Halbhydrats in Dihydrat fort, und es entsteht auf diese Weise ein polykristalliner, raumbeständiger Festkörper.

Der zeitliche Ablauf des Hydratationsprozesses wird in der Technik durch die Kenngrößen: Versteifungsbeginn, Versteifungsende und Hydratationsende charakterisiert. Hierbei bezeichnen der Versteifungsbeginn und das Versteifungsende eine bestimmte Konsistenz der Gipsmischung, das Hydratationsende kennzeichnet das Ende der Umsetzung vom Halbhydrat zum Dihydrat. Diese Zeitkenngrößen werden jeweils vom "Einstreubeginn" an gerechnet, also vom Zeitpunkt des Zusammentreffens von Bindemittel und Wasser an.

Die Umsetzung des Bindemittels mit Wasser zum Dihydrat ist ein exothermer Vorgang, d.h. es wird Wärme frei. Deshalb ist es möglich, durch die Auswertung der Hydratationstemperatur-Zeit-Kurve das Hydratationsende zu bestimmen, nämlich als die Zeit vom Einstreubeginn bis zun. Maximum der Temperaturkurve. Bei Laboruntersuchungen erfolgt diese Messung meist unter adiabatischen Bedingungen, um einen Wärmeabfluß und damit eine Verfälschung der Temperatur-Zeit-Kurve zu vermeiden. Für technische Prozesse ist es in der Regel ausreichend, den Temperaturverlauf unter den jeweils gegebenen Bedingungen zu ermitteln. Durch den Wärneabfluß an die Umgebung verschiebt sich das Temperaturmaximum zu kürzeren Zeiten. Dies kann aber für den hier vorgesehenen Zweck vernachlässigt oder innerhalb eines Regelkreises kompensiert werden.

Die Kenngrößen Versteifungsbeginn und Hydratationsende stehen bei allen Bindemitteln auf der Basis von Calciumsulfat-Halbhydrat in einem konstanten Verhältnis zueinander: Überschlägig gilt, daß die Zeit vom Einstreu- bis zum Versteifungsbeginn und die vom Einstreubeginn bis zum Hydratationsende sich wie 1 : 2,5 verhalten. Man kann zwar diese Abbindezeiten des Bindemittels in weiten Grenzen variieren, zum Beispiel durch Brennbedingungen bei dessen Herstellung und oder durch Zugabe von Stellmitteln (Beschleuniger, Verzögerer). Das genannte Verhältnis bleibt aber auch unter solchen Bedingungen praktisch konstant. Bei speziellen Bindemitteln (zum Beispiel Chemiegips bestimmter Herstellungsverfahren) ist ein anderer Zahlenwert dieses Verhältnisses möglich, der aber auch - unabhängig vom Stellmittel - praktisch konstant bleibt.

Bei der Herstellung plattenförmiger Werkstoffe auf Gipsbasis wird häufig ein Kalibrier- oder Preßvorgang angewendet, zum Beispiel bei der Herstellung von Gipskartonplatten, glasfaserverstärkten Gipsplatten oder gipsgebundenen Platten in einem Halbtrockenverfahren nach der deutschen Auslegeschrift 2 919 311. Nach dem Stand der Technik gilt die Regel, daß der Kalibrier- oder Preßvorgang spätestens mit dem Versteifungsbeginn anfangen und frühestens nach Versteifungsende, besser noch nach Hydratationsende, beendet werden darf; nur so wird die maximale Feuchtfestigkeit des Werkstoffes gewährleistet.

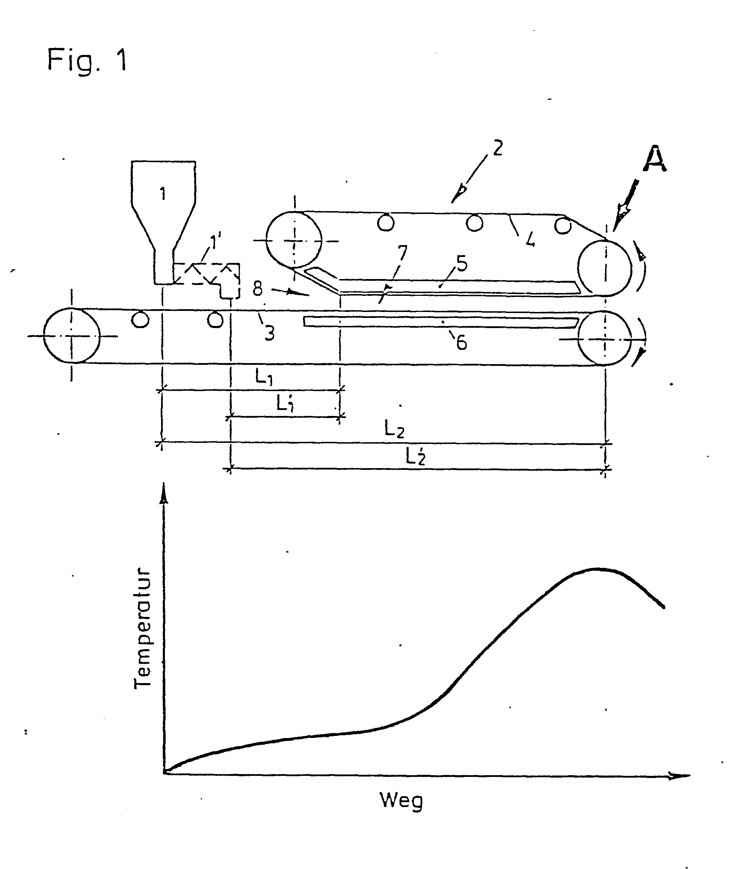

Für die genannten Herstellungsverfahren werden sinnvollerweise kontinuierliche Anlagen verwendet, die gegenüber diskontinuierlichen höheren Fertigungskapazitäten ermöglichen und bei denen eine fertigungstechnisch vorteilhafte, kontinuierliche Mischung und Formung verwirklicht werden kann. Eine solche Anlage ist schematisiert in Figur 1 beispielhaft dargestellt. Sie besteht aus einer geeigneten Misch- und Streustation 1 und einer Kalibrier- oder Preßvorrichtung 2. Diese wiederum besteht aus einem unteren umlaufenden Band 3, auf das die Mischung aufgetragen wird, und einem oberen umlaufenden Band 4. Beide Bänder werden auf der einander zugewandten Seite durch Abstützungsvorrichtungen 5 und 6 so abgestützt, daß sich ein der gewünschten Plattendicke entsprechender Kalibrier- oder Preßspalt 7 ergibt, der gegebenenfalls auf der dem Misch- und Streuaggregat zugewandten Seite einen Verdichtungsteil 8 aufweist.

Aufgrund des bereits erwähnten konstanten zeitlichen Verhältnisses zwischen Versteifungsbeginn und Hydratationsende gibt es erfindungsgemäß ein Optimum hinsichtlich der Länge der Fertigungsanlage: Bei einer bestimmten Vorschubgeschwindigkeit und bei bestimmten, nachfolgend erläuterten Längenverhältnissen der Anlage entspricht das Verhältnis der Verweilzeiten der Mischung vom Beginn des Mischens bis zum Beginn des Kalibrier- und Preßspalts einerseits und vom Beginn des Mischens bis zum Ende des Kalibrier- und Preßspalts andererseits dem erwähnten Verhältnis der Abbindezeiten (zum Beispiel 1 : 2,5), so daß entsprechend der den Stand der Technik darstellenden Regel, wonach der Kalibrier- oder Preßvorgang spätestens mit dem Versteifungsbeginn anfangen und frühestens mit dem Versteifungsende oder Hydratationsende enden darf, die maximale Feuchtfestigkeit des Werkstoffes erreicht wird.

Hierfür wird die in Figur 1 angegebene Länge $L_1$ vom Auftreffpunkt der Mischung bis zum Beginn des Kalibrier- und Preßspalts gleich dem Produkt aus Vorschubgeschwindigkeit und der Zeitdauer zwischen Misch- und Versteifungsbeginn und die Länge $L_2$ vom Auftreffpunkt der Mischung bis zum Ende des Kalibrier- und Preßspalts dem Produkt aus Vorschubgeschwindigkeit und der Zeitdauer zwischen Mischbeginn und Hydratationsende gewählt. Hierbei wird unterstellt, daß die Misch- und Streuzeit gegenüber den Abbindezeiten vernachlässigt werden kann, wie es in der Regel bei kontinuierlichen Anlagen der Fall ist. Bei einer Misch- und Streuzeit, die im Verhältnis zum Versteifungsbeginn nicht mehr vernachlässigt werden kann (in Figur 1 beispielhaft durch einen Schneckenförderer 1' dargestellt), müssen sowohl die Strecke $L_1$ nach Figur 1 als auch die Strecke $L_2$ um einen Betrag gekürzt werden, der sich als Produkt aus Misch- und Streuzeit und Vorschubgeschwindigkeit errechnet. Es ergeben sich in diesem Fall die Längen $L_1'$ und $L_2'$ (vgl. Figur 1).

Bezeichnet man die Vorschubgeschwindigkeit der Anlage mit v, die Zeitdauer vom Mischbeginn bis zum Versteifungsbeginn mit $t_A$, die Zeitdauer vom Mischbeginn bis zum Hydratationsende mit $t_H$ und die Dauer der Misch- und Streuzeit mit $t_M$, so lassen sich die angegebenen Strecken wie folgt darstellen:

$$L_1 = v \cdot t_A$$
$$L_2 = v \cdot t_H$$
$$L_1' = v \cdot (t_A - t_M)$$
$$L_2' = v \cdot (t_H - t_M)$$

Unter den geschilderten Umständen setzt beim Betreiben der Anlage der Kalibrier- und Preßvorgang mit dem Versteifungsbeginn der Mischung ein und wird mit dem Hydratationsende abgeschlossen. In diesem Fall erhält man innerhalb der Anlage eine Temperaturverteilung in Fertigungsrichtung wie im Diagramm der Figur 1 unten dargestellt.

Die in diesem Beispiel angesprochenen Bindemittel weisen aber in der Regel Schwankungen hinsichtlich des Hydratationsendes in der Größenordnung von einigen Minuten auf. Außerdem können die Abbindezeiten zum Beispiel durch die Umgebungstemperatur und bei der Verwendung organischer Zuschlagstoffe, zum Beispiel Holzspäne, durch deren wasserextrahierbare Stoffe sowie weitere Faktoren beeinflußt werden.

Die Schwankungen im Abbindeverhalten der Bindemittel können zum Teil durch ein Homogenisieren verschiedener Chargen vermindert werden. Außerdem kann man die Abbindezeiten durch ein auf ihre Schwankungen abgestimmtes Dosieren von Stellmitteln vergleichmäßigen. Dies erfordert allerdings zunächst eine genaue Bindemittelkontrolle und eine laufende aufwendige Überwachung der Produktion, wobei erfahrungsgemäß Abbindeschwankungen aufgrund von Meß- und Dosierungsfehlern nicht zu vermeiden sind.

Es wäre möglich, die Anlagenlängen $L_1$ und $L_2$ so zu wählen, daß auch bei der kleinsten Zeitdauer vom Mischbeginn bis zum Versteifungsbeginn ein rechtzeitiges Kalibrieren oder Pressen sowie auch bei der längsten zu erwartenden Zeitdauer vom Mischbeginn bis zum Hydratationsende ein Abbinden innerhalb der Kalibrier- oder Preßvorrichtung gewährleistet ist; dieses Vorgehen würde die Investitionskosten einer derartigen Anlage erhöhen und eine wirtschaftlich günstige Betriebsweise nicht zulassen.

Die vorstehend dargelegten Zusammenhänge gelten entsprechend auch für andere exotherm erhärtende Bindemittel, zum Beispiel Zement und modifizierte sulfatische Bindemittel, bei denen gleichermaßen der zeitliche Ablauf der Erhärtung bei der Fertigung berücksichtigt werden muß.

Durch die vorliegende Erfindung werden die geschilderten Nachteile vermieden, und es wird bei geringstmöglichen Investitionskosten eine wirtschaftlich optimale Betriebsweise ermöglicht, und zwar durch ein selbständiges Regelsystem für eine Anlage zur kontinuierlichen Herstellung plattenförmiger Werkstoffe unter Verwendung exotherm erhärtender Bindemittel, welches Schwankungen der Abbindezeiten des verwendeten Bindemittels berücksichtigt und jederzeit eine optimale Auslastung der Anlage gewährleistet.

Die Vorschubgeschwindigkeit wird nach der Erfindung in einer Anlage entsprechend Figur 1 so geregelt, daß das Temperaturmaximum der abbindenden Mischung am Ende der Kalibrier- oder Preßvorrichtung erreicht wird. Diese Funktion wird von einem Regelkreis übernommen, der zum Beispiel über eine entsprechende Schaltung auf die Antriebsmotoren der Kalibrier- oder Preßvorrichtung samt Misch- und Aufgabestation wirkt. Als Signalgeber des Regelkreises sind mindestens zwei kontinuierlich messende Temperaturfühler 9, 10 im Bereich der Kalibrier- oder Preßvorrichtung 2 angeordnet.

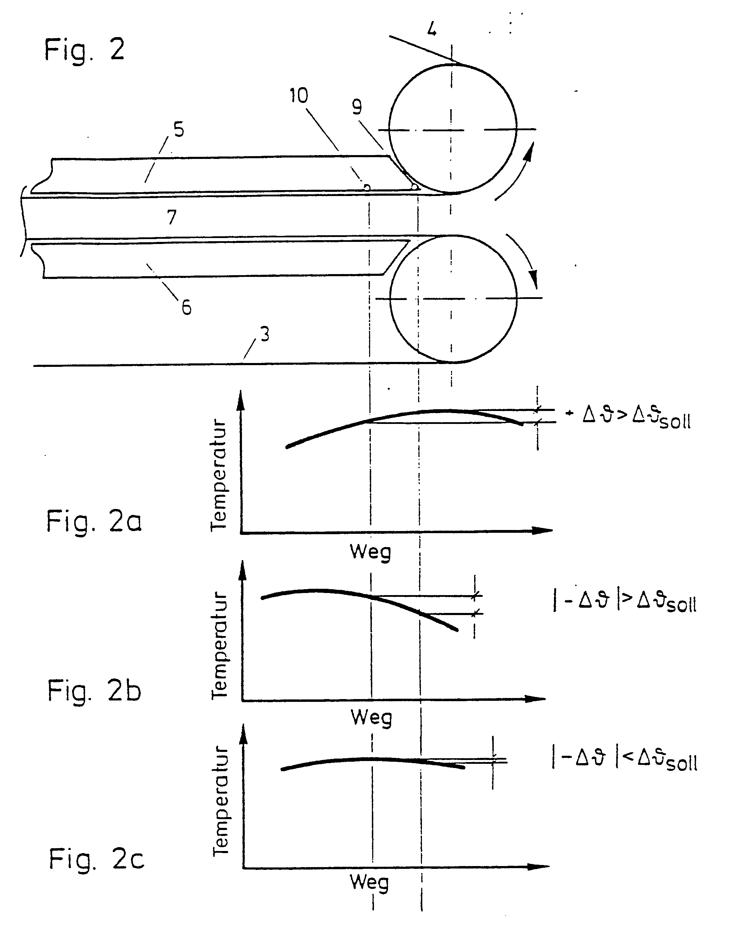

Vorzugsweise befinden sich diese Temperaturfühler im Auslaufteil der Kalibrier- oder Preßvorrichtung 2. Dies ist beispielhaft in Figur 2 dargestellt; die Temperaturfühler sind mit 9 und 10 bezeichnet. Der zweite oder letzte Temperaturfühler 9 ist bei diesem Ausführungsbeispiel unmittelbar vor dem Ende des konstanten Kalibrier- oder Preßspalts 7 angeordnet.

Zur Temperaturmessung können entweder berührungslos messende Temperaturfühler 9, 10 außerhalb der Kalibrier- oder Preßaggregate 2 oder berührend messende Temperaturfühler, wie beispielsweise Widerstandsthermometer oder Thermoelemente, im feststehenden Abstützsystem der Kalibrier- oder Preßaggregate verwendet werden.

Anstelle von nur je einem Temperaturfühler 9 und 10 in Figur 2 können auch quer zur Laufrichtung mehrere Temperaturfühler zwecks Mittelwertbildung angeordnet werden, um so mögliche Schwankungen über die Bandbreite auszugleichen.

Die in ein elektrisches Signal umgesetzten Meßwerte der Temperaturfühler werden in einem Regelkreis ständig miteinander verglichen. Als Stellgröße zur Regelung der Vorschubgeschwindigkeit der Anlage wird die Differenz zwischen dem - in Laufrichtung gesehen - letzten Meßwert und dem Meßwert des vorgeordneten Temperaturfühlers oder der vorgeordneten Temperaturfühler verwendet. Diese Differenz wird mit einem vorgegebenen Sollwert verglichen.

Vorzugsweise erfolgt die Regelung der Vorschubgeschwindigkeit der Anlage nach folgenden Kriterien:

(a)    Ist der - in Laufrichtung des Bandes 3 gesehen - letzte Meßwert um eine nach den jeweiligen Anlagenkenngrößen zu definierende Differenz $\Delta \vartheta_{soll}$ größer als der oder die Meßwerte des oder der davor angeordneten Temperaturfühler (Figur 2a: $+ \Delta \delta$), so ist das Temperaturmaximum der abbindenden Mischung noch nicht erreicht, und das resultierende Regelsignal verlangsamt die Bandgeschwindigkeit.

(b)    Ist der Meßwert des - in Laufrichtung des Bandes gesehen - letzten Temperaturfühlers dagegen um die Differenz $\Delta \delta_{soll}$ niedriger als der oder die vorher erhaltenen Meßwerte, so ist das Temperaturmaximum bereits erreicht, und die Bandgeschwindigkeit wird durch ein entsprechendes Regelsignal beschleunigt (Figur 2b).

(c)    Innerhalb dieser Grenzen, d.h. bei gleich großer Temperatur der beiden letzten Meßstellen oder bei einer Temperaturdifferenz, die dem Betrag nach kleiner als der vorgegebene Wert $\Delta \delta_{soll}$ ist, wird kein Regelsignal gegeben, und die Bandgeschwindigkeit bleibt unverändert (Figur 2c).

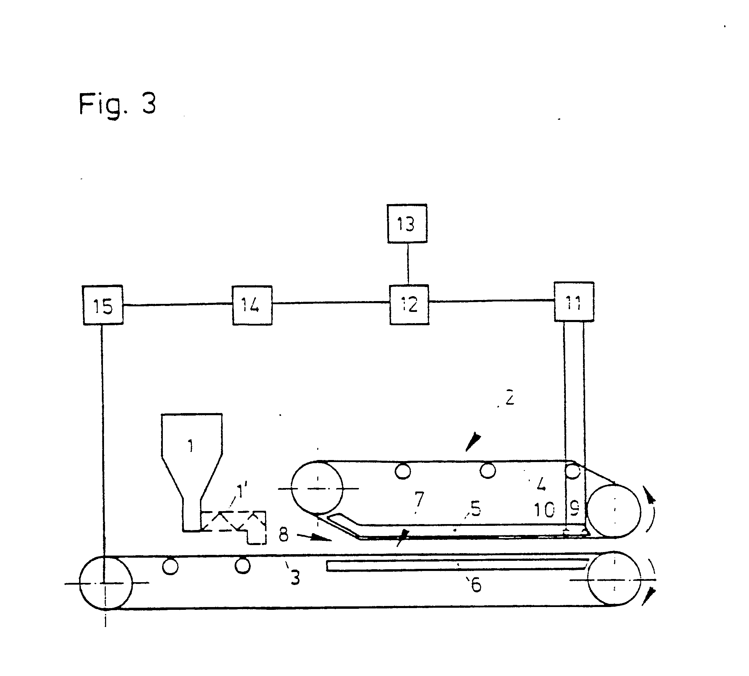

Die Regelschaltung kann beispielsweise so ausgebildet sein, daß die beiden Temperaturfühler 9 und 10, wie Figur 3 zeigt, mit einem Meßwertwandler 11 verbunden sind, der die Differenz zwischen den ermittelten Temperaturmeßwerten als Istwert bildet. Dieser Istwert wird in einem Stellsignalgeber 12 mit einem Sollwert von einem Sollwertgeber 13 verglichen, und es wird je nach dem Ergebnis dem Stellglied 14 ein Stellsignal zugeführt, wodurch die Drehzahl eines Antriebsmotors 15 für das Band 3 entweder unverändert bleibt bzw. erhöht oder verringert wird.

**Patentansprüche**

1. Einrichtung zum kontinuierlichen Herstellen von Werkstoffen unter Verwendung exotherm erhärtender Bindemittel, wie Gips oder Zement, mit einer Misch- und Aufgabestation und einer Kalibrier- oder Preßvorrichtung und mit einer Regelanordnung hierfür, dadurch gekennzeichnet, daß der Abstand ($L_1$ bzw. $L_1'$) zwischen Aufgabestation (1) und Einlauf der Kalibrier- oder Preßvorrichtung (2) einerseits und der Abstand ($L_2$ bzw. $L_2'$) zwischen Aufgabestation (1) und Ende der Kalibrier- oder Preßvorrichtung (2) andererseits unter Berücksichtigung der Dauer der Misch- und Streuzeit ($t_M$) dem Verhältnis der Zeitdauer ($t_A$) von Mischbeginn bis Versteifungsbeginn zu der Zeitdauer ($t_H$) von Mischbeginn bis Hydrationsende entspricht, und daß die Vorschubgeschwindigkeit (v) der kontinuierlichen Einrichtung so geregelt wird, daß das Temperaturmaximum des exotherm erhärtenden Bindemittels kurz vor dem Verlassen der Kalibrier- oder Preßvorrichtung (2) erreicht wird.

2. Einrichtung nach Anspruch 1, dadurch gekennzeichnet, daß als Istwertgeber mindestens zwei in Laufrichtung der Einrichtung im Abstand voneinander angeordnete Temperaturfühler (9, 10) im Bereich der Kalibrier- oder Preßvorrichtung (2) angeordnet sind.

3. Einrichtung nach Anspruch 1 und 2, dadurch gekennzeichnet, daß die Temperaturfühler (9, 10) vorzugsweise im Auslaufteil der Kalibrier- oder Preßvorrichtung (2) angeordnet sind, und daß der zweite oder letzte Temperaturfühler (9), in Laufrichtung der Einrichtung gesehen, unmittelbar vor dem Auslauf der Kalibrier- oder Preßvorrichtung (2) angeordnet ist.

4. Einrichtung nach Anspruch 1 und 3, dadurch gekennzeichnet, daß ein Meßwertwandler (11), insbesondere ein Differenzverstärker, zur Bildung des Istwerts aus der Differenz zwischen dem Temperaturmeßwert, der von dem in Laufrichtung der Einrichtung letzten Temperaturfühler (9) geliefert wird, und dem Temperaturmeßwert oder den Temperaturmeßwerten, der bzw. die von einem oder mehreren dem letzten Temperaturfühler (9) vorgeordneten Temperaturfühlern (10) geliefert wird bzw. werden, vorgesehen ist.

5. Einrichtung nach Anspruch 4, dadurch gekennzeichnet, daß bei einer positiven Differenz, die einen einrichtungsspezifisch vorbestimmten Wert überschreitet, die Vorschubgeschwindigkeit der kontinuierlichen Einrichtung verringert wird.

6. Einrichtung nach Anspruch 4 oder 5, dadurch gekennzeichnet, daß bei einer negativen Differenz, die einen einrichtungsspezifisch vorbestimmten Wert dem Betrag nach überschreitet, die Vorschubgeschwindigkeit der kontinuierlichen Einrichtung beschleunigt wird.

7. Einrichtung nach Anspruch 4, 5 oder 6, dadurch gekennzeichnet, daß bei einer absoluten Differenz, die unterhalb eines vorbestimmten Sollwerts liegt, die Vorschubgeschwindigkeit der kontinuierlichen Einrichtung unverändert gelassen wird.

8. Einrichtung nach einem der Ansprüche 2 bis 7, dadurch gekennzeichnet, daß jeweils mehrere Temperaturfühler rechtwinklig zur Laufrichtung angeordnet sind, deren Meßwerte gemittelt werden, bevor daraus der Istwert gebildet wird.

## Claims

1. Apparatus for the continuous production of materials using exothermically hardening binders, such as gypsum or cement, with a mixing and charging station and a calibrating or pressing means and with a regulating system for the same, characterized in that the distance ($L_1$ or $L_1'$) between the charging station (1) and the inlet to the calibrating or pressing means (2) on the one hand and the distance ($L_2$ or $L_2'$) between the charging station (1) and the end of the calibrating or pressing means (2) on the other and whilst taking account of the duration of the mixing and strewing time ($t_M$) corresponds to the ratio of the time interval ($t_A$) from the start of mixing to the start of thickening to the time interval ($t_H$) from the start of mixing to the end of hydration and that the advance speed (v) of the continuous apparatus is regulated in such a way that the temperature maximum of the exothermically hardening binder is reached shortly prior to leaving the calibrating or pressing means (2).

2. Apparatus according to claim 1, characterized in that the real value pick-up is constituted by at least two spaced temperature sensors (9, 10) in the direction of travel of the apparatus and located in the vicinity of the calibrating or pressing means (2).

3. Apparatus according to claims 1 and 2, characterized in that the temperature sensors (9, 10) are preferably located in the outlet part of the calibrating or pressing means (2) and that the second or last temperature sensor (9), considered in the direction of travel of the apparatus, is positioned directly upstream of the outlet of the calibrating or pressing means (2).

4. Apparatus according to claims 1 and 3, characterized in that a transducer (11), in particular a differential amplifier, is provided for forming the real value from the difference between the measured temperature value supplied by the last temperature sensor (9) in the direction of travel of the apparatus and the measured temperature value or values supplied by one or more temperature sensors (10) positioned upstream of the last temperature sensor (9).

5. Apparatus according to claim 4, characterized in that in the case of a positive difference, which exceeds an apparatus-specific, predetermined value, the feed rate of the continuous apparatus is reduced.

6. Apparatus according to claims 4 or 5, characterized in that in the case of a negative difference, whose amount exceeds an apparatus-specific, predetermined value, the feed rate of the continuous apparatus is increased.

7. Apparatus according to claims 4, 5 or 6, characterized in that in the case of an absolute difference, which is below a predetermined desired value, the feed rate of the continuous apparatus is left unchanged.

8. Apparatus according to one of the claims 2 to 7, characterized in that in each case several temperature sensors are arranged at right angles to the direction of travel and the measured values thereof are averaged before the real value is formed therefrom.

## Revendications

1. Dispositif pour la fabrication en continu de matériaux en utilisant un liant à durcissement exothermique, tel que le plâtre ou le ciment, avec un poste de mélange et de distribution et un dispositif de calibrage ou de pressage et avec un dispositif de réglage à cet effet, caractérisé en ce qu'en considérant la durée du mélange et de l'épandage, l'écartement ($L_1$ ou $L_1'$) entre poste

de distribution (1) et entrée du dispositif de calibrage ou de pressage (2) d'une part et l'écartement ($L_2$ ou $L_{2'}$) entre le poste de distribution (1) et la fin du dispositif de calibrage ou de pressage (2) d'autre part, correspond au rapport de la durée ($t_A$) entre le début du mélange au début du raidissement par rapport à la durée ($t_H$) entre le début de mélange à la fin de l'hydratation, et en ce que la vitesse d'avance (v) du dispositif en continu est réglée de façon que le maximum de température du liant à durcissement exothermique est atteint, peu avant avoir quitté le dispositif de calibrage ou de pressage (2).

2. Dispositif selon la revendication 1, caractérisé en ce qu'au moins deux capteurs de température (9, 10) sont disposés à distance l'un de l'autre dans le sens d'avancement du dispositif, au voisinage du dispositif de calibrage ou de pressage (2), comme transmetteurs de valeur réelle.

3. Dispositif selon la revendication 1 ou 2, caractérisé en ce que les capteurs de température (9, 10) sont de préférence disposés dans la partie de sortie du dispositif de calibrage ou de pressage (2), et en ce que le deuxième, ou dernier, capteur de température (9) est disposé avant la sortie du dispositif de calibrage ou de pressage (2), lorsqu'on observe dans le sens du déplacement du dispositif.

4. Dispositif selon les revendications 1 et 3, caractérisé en ce qu'un convertisseur de mesure (11), en particulier un amplificateur de différence, est prévu pour former la différence entre la valeur de mesure délivrée par le capteur de température (9) placé en dernier dans le sens de l'avancement du dispositif, et la valeur de mesure de température, ou les valeurs de mesure de température délivrée(s) par un ou plusieurs capteurs de température (10) disposés en amont du dernier capteur de température (9).

5. Dispositif selon la revendication 4, caractérisé en ce que la vitesse d'avance du dispositif en continu est limitée dans le cas d'une différence positive, dépassant une valeur prédéterminée spécifique du dispositif.

6. Dispositif selon la revendication 4 ou 5, caractérisé en ce que la vitesse d'avance du dispositif en continu est accélérée dans le cas d'une différence négative, dont la valeur dépasse une valeur prédéterminée spécifique du dispositif.

7. Dispositif selon la revendication 4, 5 ou 6, caractérisé en ce que la vitesse d'avance du dispositif en continu est maintenue inchangée dans le cas d'une différence absolue située en deçà d'une valeur de consigne prédéterminée.

8. Dispositif selon l'une des revendications 2 à 7, caractérisé en ce que plusieurs capteurs de température sont chaque fois disposés à angle droit par rapport au sens d'avancement, capteurs dont est calculée la moyenne des valeurs de mesure, avant que n'en soit formée la valeur réelle.

Fig. 1

Fig. 2

Fig. 2a

Fig. 2b

Fig. 2c

# Fig. 3